# EUROPÄISCHE PATENTANMELDUNG

(11) **EP 1 145 927 A1**
(43) Veröffentlichungstag der Anmeldung: **17.10.2001**
(21) Anmeldenummer: 01108363.1
(22) Anmeldetag: 03.04.2001
(51) Int. Cl.: B60T 8/88, B60T 17/22, B60T 13/74, B60K 41/26

(54) **Elektrisch gesteuertes, insbesondere elektromechanisches Bremssystem für ein Kraftfahrzeug**

(30) Priorität: 12.04.2000 DE 10018178
(71) Anmelder: Bayerische Motoren Werke Aktiengesellschaft, 80809 München (DE)
(72) Erfinder: Kufner, Thomas, 85221 Dachau (DE); Vielwerth, Gerhard, 91795 Obereichstätt (DE)

(57) **Zusammenfassung**

Die Erfindung betrifft ein elektrisch gesteuertes, insbesondere elektromechanisches Bremssystem für ein Kraftfahrzeug, insbesondere einen Personenkraftwagen, mit einer die einwandfreie Systemfunktion kontrollierenden sowie eine fehlerabhängige Fehlerbehandlung durchführenden elektronischen Überwachungseinheit, wobei bei Erkennen eines Fehlers, aufgrund dessen die zur Verfügung stehende Bremsleistung herabgesetzt ist, neben einer entsprechenden Information für den Fahrzeugführer bei einem Bremsvorgang zusätzlich zur Betriebsbremse selbsttätig eine weitere Bremswirkung initiiert wird. Bevorzugt wird zusätzlich zur Betriebsbremse eine Hilfsbremsanlage oder eine Feststellbremsanlage aktiviert, daneben kann ein zwischen der Fahrzeug-Antriebsmaschine und den angetriebenen Fahrzeugrädern vorgesehenes Getriebe mit veränderlicher Übersetzung in Richtung eines kleinen Übersetzungsverhältnisses geschaltet werden. Im Übrigen kann der Fahrzeugführer eine haptische Rückmeldung über die herabgesetzte Bremsleistung und eine akustische und/oder optische Anweisung über das günstigste weitere Verhalten erhalten. Auch kann das Verkehrsumfeld gewarnt werden. Im übrigen kann bei panischem Verhalten des Fahrzeugführers oder wenn ein vom Fahrzeugführer initiierter Bremswunsch nicht vollständig umgesetzt werden kann, oder bei einem Fahrzeug-Crash auf einen entsprechenden Fehler geschlossen werden.

## Beschreibung

Die Erfindung betrifft ein elektrisch gesteuertes, insbesondere elektromechanisches Bremssystem für ein Kraftfahrzeug, insbesondere einen Personenkraftwagen, mit einer die einwandfreie Systemfunktion kontrollierenden sowie eine fehlerabhängige Fehlerbehandlung durchführenden elektronischen Überwachungseinheit. Zum technischen Umfeld wird neben der DE 195 16 639 A1 insbesondere auf die DE 198 32 950 A1 verwiesen.

Derzeit befinden sich elektromechanische Bremssysteme in Entwicklung, die aus einer Einheit zur Fahrerwunscherfassung mit einer Simulation der Kraft-Weg-Rückmeldung über einen Bremspedalsimulator, einer zentralen Recheneinheit und intelligenten elektromechanischen Radaktuatoren zur Erzeugung der gewünschten Zuspannkraft an der Bremsscheibe bestehen. Im Bremspedalsimulator wird dabei vorzugsweise das Bremspedalgefühl einer konventionellen hydraulischen Bremse nachgebildet, wobei in der Regel diese Pedalsimulatoren durch Feder-Dämpferelemente oder mit Gummi- und Elastomerwerkstoffen aufgebaut sind. Der Bremswunsch wird dabei über mehrere Sensoren aufgenommen und in entsprechende elektrische Signale gewandelt. Aufgrund dieser systemimmanenten "by-wire"-Entkoppelung ist das Bremspedal physikalisch vom eigentlichen Bremssystem getrennt.

Grundsätzlich sind bei Bremsanlagen die Mehrzahl der Fehler, die zu einem signifikanten Bremsleistungsverlust oder zu einem Totalversagen der Bremsanlage führen, sog. schlafende Fehler. Der Fahrer oder Fahrzeugführer bemerkt die Fehlfunktion erst beim Betätigen der Bremse bzw. des Bremspedales. Bei konventionellen hydraulischen Bremsanlagen bspw. verlängert sich bei einem Ausfall eines Kreises der üblicherweise aus zwei Hydraulikkreisen aufgebauten Bremsanlage der Pedalweg signifikant. Bei Ausfall einer pneumatischen oder hydraulischen Bremskraft-Verstärkungseinrichtung verspürt der Fahrzeugführer eine Änderung in der Zuordnung zwischen Pedalkraft und Pedalweg in Relation zur erzielbaren Fahrzeug-Verzögerung. Grundsätzlich nachteilig ist hierbei, dass diese Fehlerinformation erst dann erfolgt, wenn die Bremse betätigt wird.

Bei einem elektrisch gesteuerten Bremssystem mit einem Bremspedalsimulator, welches auch mit dem Begriff "brake-by-wire" bezeichnet wird, erhält nun der Fahrzeugführer durch die bereits genannte "by-wire"-Pedalentkopplung auch bei Betätigung keinerlei Hinweis auf Fehlfunktionen oder Leistungsverlust der Bremsanlage. Bezüglich dieses sog. "brake-by-wire", welches neben einem elektromechanischen Bremssystem auch ein elektrohydraulisches Bremssystem umfasst, wird nun auf die eingangs zweitgenannte DE 198 32 950 A1 verwiesen. In dieser Schrift ist ein Verfahren zur Behandlung von Fehlern in einem elektronischen Bremssystem sowie eine zugehörige Vorrichtung beschrieben, wobei regelmäßige Überprüfungsroutinen durchgeführt werden und bei Erkennen eines Fehlers eine fehlerzustandsabhängige Fehlerbehandlung durchgeführt wird. In Abhängigkeit von der Schwere des Fehlers werden dabei unterschiedlich farbige Warnlampen angesteuert oder akustische Warnsignale ausgelöst, mit Hilfe derer der Fahrzeugführer auf diesen Fehler hingewiesen wird, ferner kann die mögliche maximale Fahrzeuggeschwindigkeit durch Eingriff auf die Steuerung des Fzg.-Antriebsaggregates begrenzt werden oder überhaupt eine Inbetriebnahme desselben unterbunden werden. Hiermit läßt sich die Fehlerproblematik somit grundsätzlich entschärfen.

In der eingangs erstgenannten DE 195 16 639 A1 sind die unterschiedlichen Bremsanlagen eines Kraftfahrzeuges, insbesondere Personenkraftwagens beschrieben, wie sie seitens des Gesetzgebers vorgeschrieben sind. So wird bei einem konventionellen hydraulischen Bremssystem die gesetzlich vorgeschriebene autonome Hilfsbremsanlage durch die weiterhin vorhandene Feststellbremse realisiert. Bei einem elektromechanischen Bremssystem hingegen wird die Feststellbremswirkung zumeist durch mechanische Verriegelung eines oder mehrerer elektromechanischer Aktuatoren realisiert. Eine Hilfsbremsanlage für ein elektromechanisches Bremssystem kann durch eine zusätzliche mechanische oder hydraulische oder elektrische Betätigungseinheit eines Bremsen-Aktuators oder durch eine separat zu betätigende und vom elektromechanischen Bremssystem unabhängige, zusätzliche Bremsanlage realisiert werden.

In der Praxis treten bei konventionellen Bremsanlagen weiter oben beispielhaft genannte Fehler nur in extrem wenigen Ausnahmefällen auf, wobei in solchen Fällen die zur Verfügung stehende Restbremsleistung von einem durchschnittlichen Fahrzeugführer zumeist nicht vollständig genutzt werden kann, da die erforderlichen Verhaltensmuster, nämlich eine deutlich verstärkte Pedalkraft-Aufbringung und/oder eine geeignete Betätigung der Feststellbremse, praktisch niemals trainiert wurden.

Bei einem elektrisch gesteuerten Bremssystem ist nun zwar nicht mit einer größeren Fehlerhäufigkeit als bei konventionellen Bremsanlagen zu rechnen, jedoch ist es wünschenswert, bei Auftreten eines Fehlers, der bspw. analog der bereits genannten DE 198 32 950 A1 erkannt und diagnostiziert werden kann, eine deutlich wirksamere Fehlerbehandlungsmaßnahme als im bekannten Stand der Technik zur Verfügung zu haben.

Eine derartige Fehlerbehandlungsmaßnahme aufzuzeigen, ist Aufgabe der vorliegenden Erfindung.
Die Lösung dieser Aufgabe ist dadurch gekennzeichnet, dass bei Erkennen eines Fehlers, aufgrund dessen die zur Verfügung stehende Bremsleistung herabgesetzt ist, neben einer entsprechenden Information für den Fahrzeugführer bei einem Bremsvorgang zusätzlich zur Betriebsbremse selbsttätig eine weitere Bremswirkung initiiert wird. Vorteilhafte Aus- und Weiterbildungen sind Inhalt der Unteransprüche.

In der Erkenntnis, dass ein elektrisch gesteuertes Bremssystem die Möglichkeit bietet, durch Selbstdiagnose aller Systemkomponenten evtl. vorhandene, sog. schlafende Fehler im Bremssystem oder der zugehörigen elektrischen Energieversorgung zu erkennen, wird vorgeschlagen nicht nur - wie bekannt - den Fahrer oder Fahrzeugführer unverzüglich bei Auftreten des Fehlers hierüber zu informieren, d.h. eine entsprechende Warnung abzugeben, sondern darüber hinaus bei Einleitung eines Bremsmanövers durch den Fahrer selbsttätig zusätzlich zur normalen Betriebsbremse des Fahrzeuges eine weitere Bremsfunktion zu aktivieren. Hiermit ist sichergestellt, dass auch dann, wenn die normale Betriebsbremse aufgrund eines Fehlers nicht ihre volle Wirksamkeit erreichen kann, dennoch zumindest eine vergleichbare oder allenfalls wenig geringere Summen-Bremswirkung erzielt wird, und zwar dadurch, dass eine zusätzliche, weitere Bremswirkung initiiert wird.

Es wird somit vorgeschlagen, nach Erkennen eines Fehlers, der die Bremsleistung der üblichen Betriebsbremse signifikant herabsetzt, bspw. die gesetzlich vorgeschriebene (und somit zwangsläufig vorhandene) Hilfsbremsanlage automatisch zu aktivieren. Alternativ oder gleichzeitig kann - ggf. in Abhängigkeit von der Schwere des Fehlers - auch die vorhandene Feststellbremsanlage des Kraftfahrzeugs aktiviert werden.

Eine weitere Möglichkeit zur Erzeugung einer zur üblichen Betriebsbremse zusätzlichen Bremswirkung besteht darin, dass ein zwischen der Fahrzeug-Antriebsmaschine und den angetriebenen Fahrzeugrädern vorgesehenes Getriebe mit veränderlicher Übersetzung in Richtung eines kleinen Übersetzungsverhältnisses geschaltet wird, um hierdurch das Bremsmoment der Antriebsmaschine zu nutzen. Insbesondere bei einem automatisch schaltenden Getriebe besteht somit die Möglichkeit einer zwangsweisen Rückschaltung auf die kleinstmögliche Getriebestufe, um die sog. Motorbremsleistung zu aktivieren.

Da - wie bereits bekannt - ein elektrisch gesteuertes Bremssystem die Möglichkeit bietet, durch Selbstdiagnose aller Systemkomponenten evtl. vorhandene, sog. schlafende Fehler im Bremssystem oder der zugehörigen elektrischen Energieversorgung zu erkennen und den Fahrer oder Fahrzeugführer unverzüglich bei Auftreten des Fehlers hierüber zu informieren, werden weiterhin besonders wirksame Warnstrategien vorgeschlagen, die zu beachten oder wahrzunehmen der Fahrzeugführer in Anbetracht der besonderen Wichtigkeit eines funktionierenden Bremssystemes eher gezwungen ist, als bspw. einfache Warnlampen (wie im bekannten Stand der Technik). So kann der Fahrzeugführer eine haptische Rückmeldung über die herabgesetzte Bremsleistung erhalten, bspw. direkt am Bremspedal oder auch am Lenkrad, und zwar in Form von Vibrationen oder dgl., hervorgerufen durch einen sog. Shaker, oder auch in Form eines erhöhten Kraftaufwandes zum Betätigen dieses Elementes. Möglich ist weiterhin ein Vibrationsalarm, der bspw. im Fahrzeug-Sitz integriert ist.

Im Sinne einer vorteilhaften Weiterbildung der Erfindung kann der Fahrzeugführer nicht nur eine akustische und/oder optische Information über den besagten Fehler erhalten, sondern zusätzlich auch eine akustische und/oder optische Anweisung über das bzw. sein günstigstes weiteres Verhalten. Möglich ist in diesem Zusammenhang die Ausgabe von Sprachmeldungen über Verhaltenshinweisen, oder geeigneter Laufschriften (sog. Info-Strings) an einem im Fahrzeug installierten Bordcomputer. Auch können derartige Signale und Hinweise in die Windschutzscheibe über ein sog. Head-up-display eingeblendet werden. Zum Erzeugen einer ausreichenden Aufmerksamkeit wirksam ist in diesem Zusammenhang auch die Abschaltung aller im Fahrzeug-Innenraum betriebenen Multimedia-Anlagen.

In der Erkenntnis, dass ein elektrisch gesteuertes Bremssystem die Möglichkeit bietet, durch Selbstdiagnose aller Systemkomponenten evtl. vorhandene, sog. schlafende Fehler im Bremssystem oder der zugehörigen elektrischen Energieversorgung zu erkennen, wird weiterhin vorgeschlagen, nicht nur - wie bekannt - den Fahrer oder Fahrzeugführer unverzüglich bei Auftreten des Fehlers hierüber zu informieren, sondern auch sein Verkehrsumfeld. Für andere Verkehrsteilnehmer wird somit das betroffene Fahrzeug als mögliche Gefahrenquelle identifizierbar. Möglich ist in diesem Zusammenhang die selbsttätige Aktivierung von Beleuchtungseinrichtungen, wie bspw. Warnblinken, Licht an, Intervall-Lichthupe, Intervall-Bremsleuchte und ähnliches bei Auftreten eines Fehlers, der die Leistungsfähigkeit der Bremsanlage signifikant herabsetzt oder die Fahrstabilität beim Bremsen vermindert. Auch können akustische Warneinrichtungen, insbesondere die vorhandene Hupe, aktiviert werden. Möglich ist in diesem Zusammenhang auch das Absetzen eines Notrufs und/oder das Versenden einer Fehlermeldung mit Angabe eines (an sich üblichen) Fehlerspeicherinhalts an eine Servicezentrale.

Im weiteren wird erläutert, dass mögliche Fehler, die zu einer Herabsetzung der zur Verfügung stehenden Bremsleistung führen, und aufgrund derer dann die vorgeschlagenen Maßnahmen ergriffen werden bzw. werden können, nicht nur mittels einer geeigneten Diagnose-Routine in einer elektronischen Steuereinheit eines erfindungsgemäßen elektrisch gesteuerten Bremssystemes aufgedeckt werden können, sondern dass solche Fehler auch anhand anderer signifikanter Hinweise erkannt werden können. So kann anhand eines panischen Verhaltens des Fahrzeugführers auf einen die Bremsleistung herabsetzenden Fehler geschlossen werden, bspw. wenn der Fahrer das Bremspedal pumpend betätigt oder während des Fahrens die Feststellbremseinrichtung initiiert.

Wie bereits in der eingangs genannten DE 198 32 950 A1 angegeben ist, kann ferner dann auf einen derartigen Fehler geschlossen und eine der hier beschriebenen Maßnahmen ergriffen werden, wenn eine entsprechende elektronische Sicherheitsschaltung erkennt, dass mit Ausführen des nächsten Bremsvorganges ein hierfür benötigter Energiespeicher erschöpft sein wird. Gleiches gilt für Fälle oder Betriebszustände, in oder bei denen die Betriebsbremsanlage durch Überhitzung Schaden nehmen könnte.

In diesem Zusammenhang ist es auch möglich, auf einen derartigen Fehler zu schließen, wenn in einer elektronischen Steuer- und Berechnungseinheit erkannt wird, dass eine vom Fahrzeugführer ausgelöste Bremspedalbetätigung mit einem Kraft-Weg-Verhältnis größer einem Grenzwert über einer bestimmten Zeitspanne ausgeführt wird und wenn aufgrund der Fahrzeugsensorik oder darauf basierender Algorithmen erkannt wird, dass die erwartete Fahrzeugverzögerung sich nicht einstellen kann. In anderen Worten ausgedrückt kann die Tatsache, dass ein vom Fahrzeugführer initiierter und hinsichtlich seiner Intensität analysierter Bremswunsch nicht vollständig umgesetzt werden kann, als ein die zur Verfügung stehende Bremsleistung herabsetzender Fehler erkannt werden. Dies gilt auch für Betriebszustände, in denen bspw. durch ungünstige Beladungsparameter oder durch Hängerbetrieb die gesetzliche Mindestverzögerung nicht mehr erreicht werden kann.

Weiterhin kann ein soeben stattfindender Fahrzeug-Crash oder Unfall als ein die zur Verfügung stehende Bremsleistung herabsetzender Fehler erkannt werden, da hiermit verhindert werden kann, dass bei evtl. Beschädigung aller Energiespeicher im Crashfall das Fahrzeug unbremsbar wird oder nach einem Aufprall noch weiter rollt.

Grundsätzlich wird mit einem erfindungsgemäßen elektrisch gesteuerten, insbesondere elektromechanischen Bremssystem der Fahrzeugführer bei Auftreten von Abnormalitäten im Bremsverhalten unterstützt, und zwar durch die vorgeschlagene Automatisierung der Umschaltung insbesondere auf die vorhandene Hilfsbremsanlage oder auf eine Feststellbremsanlage. Hieraus resultiert eine vollständige Nutzung der im Fehlerfall verbleibenden Bremsleistung, sowie - wie erwähnt - ggf. auch ein automatisches Festbremsen des Fahrzeugs nach einem Unfall. Es erfolgt eine sofortige Warnung des Fahrers bei Auftreten eines leistungsbeeinträchtigenden Fehlers im Bremssystem. Da Fehler auch ohne Betätigung des Bremspedals erkannt werden können, bleibt dem Fahrer sowie ggf. anderen Verkehrsteilnehmern mehr Zeit, sich auf die Situation einzustellen und das Fahrzeug sicher aus dem Verkehr bringen. Neben einer sofortigen Sensibilisierung des Fahrers, dass ein sicherheitsrelevanter Fehler in der Bremsanlage vorhanden ist, können auch andere Verkehrsteilnehmer gewarnt werden, wodurch Fahrzeuge mit stark eingeschränkter Bremsleistung erkennbar werden, wobei noch darauf hingewiesen sei, dass eine Vielzahl von obigen und weiterer Details durchaus abweichend von den Ausführungen gestaltet sein kann, ohne den Inhalt der Patentansprüche zu verlassen.

## Patentansprüche

1. Elektrisch gesteuertes, insbesondere elektromechanisches Bremssystem für ein Kraftfahrzeug, insbesondere einen Personenkraftwagen, mit einer die einwandfreie Systemfunktion kontrollierenden sowie eine fehlerabhängige Fehlerbehandlung durchführenden elektronischen Überwachungseinheit,
**dadurch gekennzeichnet, dass** bei Erkennen eines Fehlers, aufgrund dessen die zur Verfügung stehende Bremsleistung herabgesetzt ist, neben einer entsprechenden Information für den Fahrzeugführer bei einem Bremsvorgang zusätzlich zur Betriebsbremse selbsttätig eine weitere Bremswirkung initiiert wird.

2. Bremssystem nach Anspruch 1,
**dadurch gekennzeichnet, dass** zusätzlich zur Betriebsbremse eine Hilfsbremsanlage oder eine Feststellbremsanlage aktiviert wird.

3. Bremssystem nach Anspruch 1 oder 2,
**dadurch gekennzeichnet, dass** zusätzlich zur Betriebsbremse ein zwischen der Fahrzeug-Antriebsmaschine und den angetriebenen Fahrzeugrädern vorgesehenes Getriebe mit veränderlicher Übersetzung in Richtung eines kleinen Übersetzungsverhältnisses geschaltet wird, um das Bremsmoment der Antriebsmaschine zu nutzen.

4. Bremssystem nach einem der vorangegangenen Ansprüche,
**dadurch gekennzeichnet, dass** der Fahrzeugführer eine haptische Rückmeldung über die herabgesetzte Bremsleistung erhält.

5. Bremssystem nach einem der vorangegangenen Ansprüche,
**dadurch gekennzeichnet, dass** der Fahrzeugführer eine akustische und/oder optische Anweisung über das günstigste weitere Verhalten erhält.

6. Bremssystem nach einem der vorangegangenen Ansprüche,
**dadurch gekennzeichnet, dass** auch das Verkehrsumfeld aufgrund der herabgesetzten Bremsleistung gewarnt wird.

7. Bremssystem nach einem der vorangegangenen Ansprüche,
**dadurch gekennzeichnet, dass** anhand panischen Verhaltens des Fahrzeugführers auf einen die Bremsleistung herabsetzenden Fehler geschlossen wird.

8. Bremssystem nach einem der vorangegangenen Ansprüche,
**dadurch gekennzeichnet, dass** die Tatsache, dass ein vom Fahrzeugführer initiierter und hinsichtlich seiner Intensität analysierter Bremswunsch nicht vollständig umgesetzt werden kann, als ein die zur Verfügung stehende Bremsleistung herabsetzender Fehler erkannt wird.

9. Bremssystem nach einem der vorangegangenen Ansprüche,
**dadurch gekennzeichnet, dass** ein Fahrzeug-Crash als ein die zur Verfügung stehende Bremsleistung herabsetzender Fehler erkannt wird.
